# EUROPÄISCHE PATENTSCHRIFT

(11) **EP 2 360 407 B1**
(45) Veröffentlichungstag und Bekanntmachung des Hinweises auf die Patenterteilung: **06.06.2012**
(21) Anmeldenummer: 11000524.6
(22) Anmeldetag: 24.01.2011
(51) Int. Cl.: F16L 23/00, F16L 23/02, F16L 23/032, F16L 23/036, F16L 37/62, F16L 23/028

(54) **Vorrichtung zum Verbinden einer Leitung an einen Flansch**
Device for connecting a pipe to a flange
Dispositif de connection d'une conduite sur une bride

(30) Priorität: 18.02.2010 DE 102010008432
(43) Veröffentlichungstag der Anmeldung: 24.08.2011
(73) Patentinhaber: WILO SE, 44263 Dortmund (DE)
(72) Erfinder: Buchholz, Bernd, 39387 Neindorf (DE)
(74) Vertreter: Cohausz Hannig Borkowski Wißgott

(56) Entgegenhaltungen:
- WO-A1-2007/003937
- DE-A1-102008 022 172

## Beschreibung

Die Erfindung betrifft eine Kombination einer Vorrichtung mit einem Flansch einer zweiten Leitung, wobei die Vorrichtung zum kurzzeitigen Verbinden einer ersten Leitung an den Flansch der zweiten Leitung dient insbesondere als Teil eines hydraulischen Prüfstandes, und wobei der Flansch der zweiten Leitung Bohrungen aufweist.

Es ist häufig erforderlich, zwei Leitungen kurzzeitig miteinander zu verbinden. So ist aus der DE 10 2008 022 172 eine Vorrichtung zur Herstellung einer Verbindung zwischen einem Messgerät und einer Rohrleitung bekannt. Beim Prüfen von Druckerhöhungsanlagen müssen die Saugleitung und die Druckleitung an die Leitungen der Prüfvorrichtung angeschlossen werden. Dies geschieht bisher durch das Aneinanderschrauben von Flanschen, so dass ein erheblicher Arbeits- und Zeitaufwand erforderlich ist.

Aufgabe der Erfindung ist es, eine Vorrichtung zu schaffen, durch die ein kurzzeitiges Verbinden von Leitungen bei geringem Zeit- und Arbeitsaufwand und bei ausreichender Dichtheit ermöglicht wird.

Diese Aufgabe wird erfindungsgemäß dadurch gelöst,
- dass die Vorrichtung am Ende der ersten Leitung befestigt ist und einen Innenraum als Verlängerung der ersten Leitung bildet,
- dass an der Vorrichtung in Richtung des Flansches der zweiten Leitung achsparallel Zugstangen vorstehen, deren Achsen mit den Bohrungsachsen fluchten,
- dass die Zugstangen an ihrem Stangenende jeweils einen Spreizkopf tragen, dessen Außendurchmesser im ungespreizten Zustand geringer ist als der Innendurchmesser der Bohrungen, und
- dass nach dem Durchstecken der Spreizköpfe durch die Bohrungen durch Zug an den Zugstangen die Spreizköpfe erweitert werden, um den Bohrungsrand zu übergreifen und den Flansch dichtend an die Vorrichtung heranzuziehen.

Hierdurch wird ein Spannsystem geschaffen, das ein sicheres Anschließen und ein wieder Lösen schnell und bei geringstem Arbeitsaufwand ermöglicht. Hierbei ist die Konstruktion einfach und von geringen Abmessungen.

Eine kompakte konstruktiv einfache und sichere Vorrichtung wird geschaffen, wenn sie einen den Innenraum umgebenden koaxialen Ringraum aufweist, in den die Zugstangen hineinreichen und dort in oder an Betätigungsvorrichtungen befestigt sind, durch die die Zugstangen längs bewegt werden.

Hierbei können die im Ringraum angeordneten Betätigungsvorrichtungen hydraulische oder pneumatische Spannzylinder aufweisen.

Besonders vorteilhaft ist es, wenn die Spreizköpfe auf der dem Kopfende abgewandten Seite jeweils einen Spreizring mit Ringsektoren aufweisen, dessen Innenfläche sich zum Kopfende hin konisch verjüngt. Hierbei kann innerhalb des Spreizringes ein entsprechend geformter Konus einliegen, der am Ende eines die Zugstange umgebenden Rohres sitzt, das unbeweglich an der Vorrichtung insbesondere an der Betätigungsvorrichtung vorsteht.

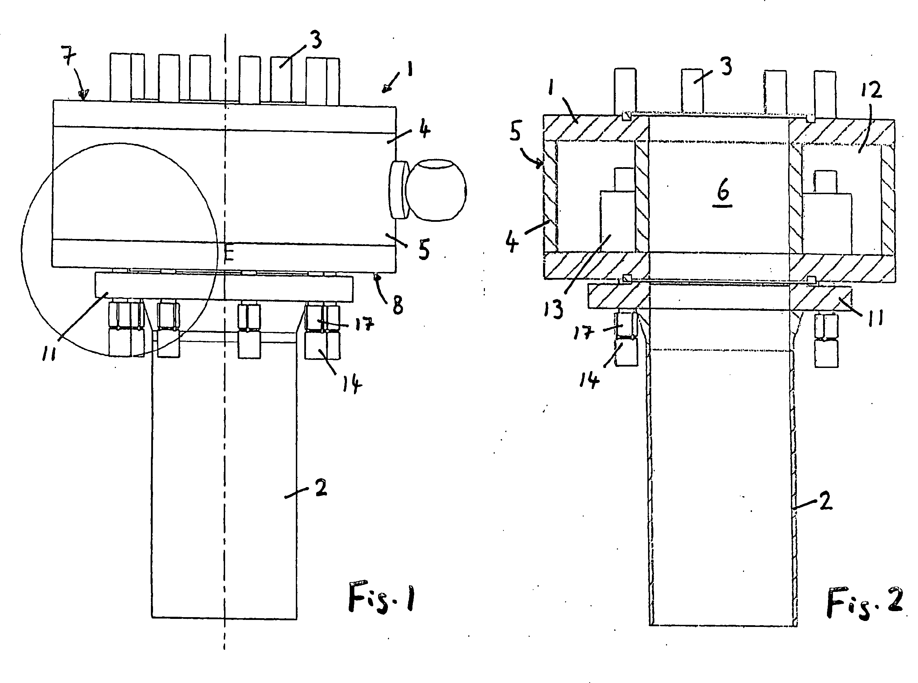

Ein Ausführungsbeispiel der Erfindung ist in den Zeichnungen dargestellt und wird im Folgenden näher beschrieben. Es zeigen
- Fig. 1: eine Seitenansicht der Vorrichtung, befestigt an der zweiten Leitung,
- Fig. 2: einen axialen Schnitt durch die Vorrichtung nach Fig. 1,

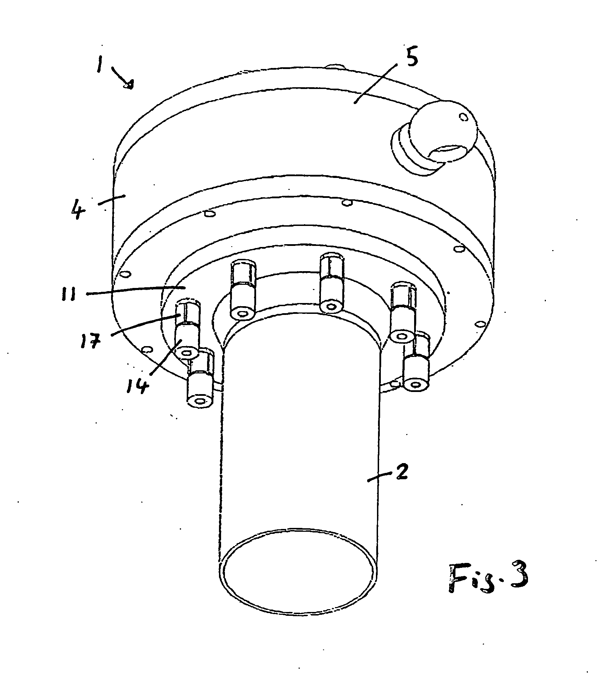

- Fig. 3: eine perspektivische Ansicht der Vorrichtung nach Fig. 1 und 2,

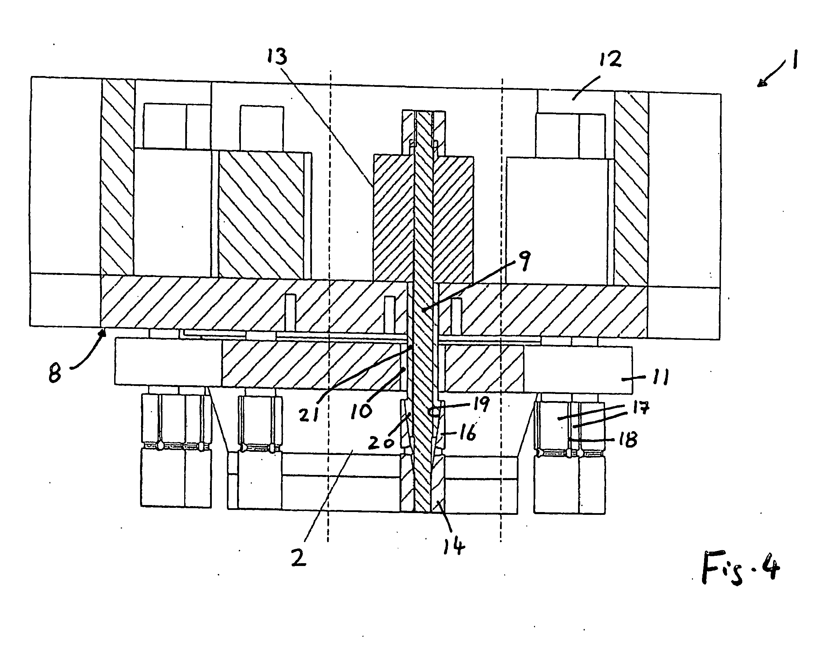

- Fig. 4: einen Längsschnitt durch die Vorrichtung in Höhe des Spannzylinders.

Die Vorrichtung (Spannvorrichtung) 1 zum kurzzeitigen Befestigen einer ersten Leitung, z. B. der Leitung eines Prüfstandes, an einer zweiten Leitung 2, insbesondere einer zu testenden Druckerhöhungsanlage, ist an der nicht dargestellten ersten Leitung durch Schrauben 3 sicher befestigt und weist einen Ringkörper 4 auf mit einer zylindrischen Außenwand 5 und einem zylindrischen koaxialen Innenraum 6. Hierbei stellt der Innenraum 6 als Hohlraum eine Verbindung zwischen beiden Leitungen her.

Der Ringkörper 4 der Vorrichtung 1 weist auf beiden Seiten ringförmige koaxiale Seitenflächen 7, 8 auf, wobei aus der Seitenfläche 7 die Schrauben 3 austreten, um an den Flansch der ersten Leitung befestigt zu werden. Auf der gegenüberliegenden Seitenfläche 8 treten Zugstangen 9 achsparallel aus, die mit Bohrungen 10 im Flansch 11 der zweiten Leitung fluchten, um durch diese hindurchtreten zu können.

Die Vorrichtung 1 bildet zwischen der zylindrischen Außenwand 5 und dem Innenraum 6 einen Ringraum 12, in den die Zugstangen 9 hineinreichen und von Spannzylindern in ihrer Längsrichtung betätigbar sind, die im Folgenden "Betätigungsvorrichtungen" 13 genannt werden. Durch diese hydraulisch oder pneumatisch angetriebenen Betätigungsvorrichtungen 13 sind die Zugstangen 9 in ihrer Längsrichtung in beide Richtungen verschieblich.

Auf den der zweiten Leitung 2 zugewandten Enden der Zugstangen 9 ist jeweils ein Spreizkopf 14 befestigt, der im ungespreizten Zustand einen Außendurchmesser aufweist, der geringfügig kleiner ist als der Innendurchmesser der Bohrungen 10 im Flansch 11 der zweiten Leitung 2. Jeder Spreizkopf 14 weist an dem der Betätigungsvorrichtung 13 zugewandten Ende einen Spreizring 16 auf, der durch achsparallele Längsspalte 18 in Ringsektoren 17 aufgeteilt ist, wobei die Ringsektoren 17 eine sich zum Kopfende hin konisch verjüngende Innenfläche 19 aufweisen, die auf einem Konus 20 aufliegen.

Der Konus 20 ist am Ende eines Rohres 21 angeformt, das koaxial die Zugstange 9 umgibt und bis in den Innenraum 6 geführt und an der Betätigungsvorrichtung 13 oder an der Vorrichtung 1 befestigt ist. Damit ist der Konus 20 unbeweglich und durch einen Zug an der Zugstange 9 zur Betätigungsvorrichtung 13 hin werden die Ringsektoren 17 durch den Konus 20 soweit aufgespreizt, dass ihr Außendurchmesser größer ist als der Innendurchmesser der Bohrung 10, so dass die Ringsektoren 17 am Außenrand der Bohrung 10 aufliegen, wenn die Zugstange 9 in Richtung der Vorrichtung 1 hin verschoben wird. Hierdurch wird der Flansch 11 der zweiten Leitung 2 gegen die Seitenfläche 8 der Vorrichtung 1 gedrückt.

Soll eine Leitung, in diesem Fall die zweite Leitung 2, an der Vorrichtung 1 befestigt werden, so braucht die zweite Leitung mit ihrem Flansch 11 nur soweit an die Vorrichtung herangeführt zu werden, dass die Zugstangen 9 mit ihren Spreizköpfen 14 die Bohrungen 10 des Flansches 11 durchdringen. Danach werden die Spannzylinder der Vorrichtungen 13 hydraulisch oder pneumatisch betätigt und durch die um wenige Millimeter einfahrende Zugstange 9 in die Vorrichtung 1 werden die Spreizköpfe 14 durch den Konus 20 erweitert und legen sich an die Ränder der Bohrungen 10 an und bei einem weiteren Zug an den Stangen 9 wird der Flansch 11 der zweiten Leitung sicher an die Vorrichtung 1 bzw. deren Seitenfläche 8 herangezogen. Ein Lösen der zweiten Leitung erfolgt durch ein Bewegen der Zugstangen 9 in umgekehrter Richtung durch die Betätigungsvorrichtungen 13.

## Patentansprüche

1. Kombination einer Vorrichtung (1) mit einem Flansch (11) einer zweiten Leitung (2), wobei die Vorrichtung (1) zum kurzzeitigen Verbinden einer ersten Leitung an den Flansch (11) der zweiten Leitung (2) dient insbesondere als Teil eines hydraulischen Prüfstandes, und wobei der Flansch (11) der zweiten Leitung Bohrungen (10) aufweist, **dadurch gekennzeichnet,**
- **dass** die Vorrichtung (1) am Ende der ersten Leitung befestigt ist und einen Innenraum (6) als Verlängerung der ersten Leitung bildet,
- **dass** an der Vorrichtung (1) in Richtung des Flansches (11) der zweiten Leitung (2) achsparallel Zugstangen (9) vorstehen, deren Achsen mit den Bohrungsachsen fluchten,
- **dass** die Zugstangen (9) an ihrem Stangenende jeweils einen Spreizkopf (14) tragen, dessen Außendurchmesser im ungespreizten Zustand geringer ist als der Innendurchmesser der Bohrungen (10), und
- **dass** nach dem Durchstecken der Spreizköpfe (14) durch die Bohrungen (10) durch Zug an den Zugstangen (9) die Spreizköpfe erweitert werden, um den Bohrungsrand zu übergreifen und den Flansch (11) dichtend an die Vorrichtung (1) heranzuziehen.

2. Kombination nach Anspruch 1, **dadurch gekennzeichnet, dass** sie einen den Innenraum (6) umgebenden koaxialen Ringraum (12) aufweist, in den die Zugstangen (9) hineinreichen und dort in oder an Betätigungsvorrichtungen (13) befestigt sind, durch die die Zugstangen längs bewegt werden.

3. Kombination nach Anspruch 2, **dadurch gekennzeichnet, dass** die im Ringraum (12) angeordneten Betätigungsvorrichtungen (13) hydraulische oder pneumatische Spannzylinder aufweisen.

4. Kombination nach einem der vorherigen Ansprüche, **dadurch gekennzeichnet, dass** die Spreizköpfe (14) auf der dem Kopfende abgewandten Seite jeweils einen Spreizring (16) mit Ringsektoren (17) aufweisen, dessen Innenfläche sich zum Kopfende hin konisch verjüngt.

5. Kombination nach Anspruch 4, **dadurch gekennzeichnet, dass** innerhalb des Spreizringes (16) ein entsprechend geformter Konus (20) einliegt, der am Ende eines die Zugstange (9) umgebenden Rohres (21) sitzt, das unbeweglich an der Vorrichtung (1) insbesondere an der Betätigungsvorrichtung (13) vorsteht.

## Claims

1. Combination of a device (1) with a flange (11) of a second pipe (2), the device (1) serving as temporary connection of a first pipe to the flange (11) of the second pipe (2) in particular as part of a hydraulic test stand, and the flange (11) of the second pipe having bores (10), **characterized in that**
the device (1) is attached to the end of the first pipe and forms an inner chamber (6) as an extension to the first pipe,
tie rods (9) whose axes are coaligned with the axes of the bores project from the device (1), parallel with the axis, towards the flange (11) of the second pipe (2),
each tie rod (9) carries at its end an expanding head (14) whose outer diameter in the unexpanded condition is smaller than the inner diameter of the bore (10), and
after the expanding heads (14) have been inserted through the bores (10) the heads are expanded by applying tension to the tie rods (9) so that the heads overlap the edge of the bore and pull the flange (11) tightly against the device (1).

2. Combination according to Claim 1, **characterized in that** it has a coaxial annular chamber (12) surrounding the inner chamber (6), into which the tie rods (9) reach and inside which they are secured in or to actuating devices (13) for displacing the tie rods longitudinally.

3. Combination according to Claim 2, **characterized in that** the actuating devices (13) arranged inside the annular chamber (12) comprise hydraulic or pneumatic clamping cylinders.

4. Combination according to any one of the preceding claims, **characterized in that** on the side facing away from the head end, each expanding head (14) has a spreader ring (16) with sectors (17) whose internal face tapers towards the head end.

5. Combination according to Claim 4, **characterized in that** a matching cone (20) fits inside the spreader ring (16) and sits on the end of a tube (21) which surrounds the tie rod (9) and projects immovably from the device (1) and in particular from the actuating device (13).

## Revendications

1. Combinaison d'un dispositif (1) avec une bride (11) d'une deuxième conduite (2), le dispositif (1) comprenant, pour la connexion temporaire d'une première conduite à la bride (11) de la deuxième conduite (2) servant plus particulièrement d'élément d'un banc de test hydraulique et la bride (11 ) de la deuxième conduite comprenant des perçages (10), **caractérisée en ce que**
- le dispositif (1) est fixé à l'extrémité de la première conduite et un espace interne (6) constitue un prolongement de la première conduite,
- sur le dispositif (1 ) en direction de la bride (11 ) de la deuxième conduite (2), dépassent des tirants (9) parallèles, dont les axes sont alignés avec les axes de perçages,
- les tirants (9) comportent à leur extrémité une tête expansible (14), dont le diamètre extérieur est, dans l'état dilaté, inférieur au diamètre intérieur des perçages (10) et
- après l'encastrement des têtes expansibles (14) dans les perçages (10), les têtes expansibles sont dilatées à l'aide d'une traction sur les tirants (9), afin de prendre le bord du perçage et d'appuyer la bride (11) de manière étanche contre le dispositif (1).

2. Combinaison selon la revendication 1, **caractérisée en ce qu'**elle comprend un espace annulaire coaxial (12) entourant l'espace interne (6), dans lequel les tirants (9) pénètrent et sont fixés dans ou sur des dispositifs d'actionnement (13), grâce auxquels les tirants sont déplacés longitudinalement.

3. Combinaison selon la revendication 2, **caractérisée en ce que** les dispositifs d'actionnement (13) disposés dans l'espace annulaire (12) comprennent des vérins de serrage hydrauliques ou pneumatiques.

4. Combinaison selon l'une des revendications précédentes, **caractérisée en ce que** les têtes expansibles (14) comprennent, du côté opposé à leur extrémité, un anneau expansible (16) avec des secteurs annulaires (17), dont la surface interne se rétrécit de manière conique en direction de l'extrémité de la tête.

5. Combinaison selon la revendication 4, **caractérisée en ce que**, à l'intérieur de l'anneau expansible (16), se trouve un cône (20) de forme correspondante, qui se trouve à l'extrémité d'un tube (21) entourant le tirant (9), qui dépasse de manière fixe dans le dispositif (1), plus particulièrement dans le dispositif d'actionnement (13).
